# DEMANDE DE BREVET EUROPEEN

(11) **EP 0 631 079 A1**
(43) Date de publication de la demande: **28.12.1994**
(21) Numéro de dépôt: 94401346.5
(22) Date de dépôt: 16.06.1994
(51) Int. Cl.: F16K 31/56, F16K 11/044

(54) **Pilote à effet bistable et utilisation de ce pilote pour la commande d'une soupape ou d'une vanne de décharge**

(30) Priorité: 18.06.1993 FR 9307367
(71) Demandeur: ATELIER DE MECANIQUE JEAN LASSERRE S.A., F-18120 Lury sur Arnon (FR)
(72) Inventeur: Gourdol, Guy, F-18100 Vierzon (FR)
(74) Mandataire: Debay, Yves

(57) **Abrégé**

Le pilote à effet bistable est caractérisé en ce qu'il est constitué d'un corps (31) dans lequel un orifice d'entrée (33) communique avec un ensemble piston obturateur (C1) disposé dans le corps cylindrique du pilote et se déplace dans une chemise (35, 39) pourvue à au moins une extrémité d'un siège (354, 355, 390), le piston obturateur (C1) mettant en communication l'orifice d'entrée (33) avec une chambre (M) qui communique d'une part avec un orifice d'entrée-sortie (34) et d'autre part avec un clapet pilote (C2) disjoncteur mécanique à effet bistable qui, dans sa deuxième position stable, met en communication la chambre (M) avec une deuxième sortie (36).

## Description

La présente invention concerne une pilote à effet bistable et son utilisation pour la commande d'une soupape ou d'une vanne de décharge.

Il est connu des pilotes pour soupape dont le fonctionnement n'offre pas une étanchéité parfaite entre les deux positions extrêmes de fonctionnement.

Un premier but de l'invention est donc de prévoir un pilote à effet bistable qui puisse fonctionner selon n'importe quelle orientation et dont l'étanchéité soit parfaite jusqu'à 99% de la pression de basculement de façon à réduire les phénomènes de fusage et améliorer le fonctionnement à l'ouverture et à la fermeture d'une soupape ou d'une vanne de décharge avec laquelle un tel pilote serait utilisé.

Ce but est atteint par le fait que le pilote est constitué d'un corps dans lequel un orifice d'entrée communique avec un ensemble piston obturateur disposé dans le corps cylindrique du pilote et se déplace dans une chemise pourvue à au moins une extrémité d'un siège, le piston obturateur mettant en communication l'orifice d'entrée avec une chambre qui communique d'une part avec un orifice de d'entrée-sortie et d'autre part avec un clapet pilote disjoncteur mécanique à effet bistable qui, dans sa deuxième position stable, met en communication la chambre avec une deuxième sortie.

Selon une autre particularité, le déplacement du piston obturateur est rendu solidaire de la déformation d'une membrane soufflet pour provoquer une ouverture partielle du clapet à effet bistable avant le déclenchement de l'effet bistable.

Selon une autre particularité, le clapet à piston obturateur se déplace dans la chemise comportant un siège situé à chaque extrémité et dont le siège inférieur est obturé de façon étanche par un joint solidaire de la face avant du piston obturateur.

Selon une autre particularité, le deuxième siège de la chemise est rendu solidaire de cette dernière par un filetage intérieur prévu sur une de ses extrémités.

Selon une autre particularité, la position de la chemise dans le corps du pilote est réglable en position par rapport au corps du pilote par des moyens pour modifier la course avant entrée en contact d'une tige solidaire du piston obturateur avec le clapet pilote pour agir sur son ouverture et pour modifier la position d'entrée en contact du piston obturateur avec le second siège.

Selon une autre particularité, le clapet pilote disjoncteur est maintenu en appui sur son siège par des rondelles à effet bistable sollicitées en permanence dans la position assurant la fermeture par une pièce d'appui sur laquelle agit l'extrémité d'un ressort de tarage dont l'autre extrémité prend appui sur la partie fixe du corps du pilote.

Selon une autre particularité, la force exercée par le ressort de tarage déterminant la pression d'ouverture du clapet pilote est réglée par une tige filetée vissée sur une partie solidaire du corps et tirant sur la pièce d'appui.

Selon une autre particularité, les étanchéités siège-clapet se font sur les faces avant.

Un autre but de l'invention est de proposer une utilisation du pilote.

Ce but est atteint par le fait que le pilote est utilisé pour commander une soupape ou vanne de décharge formée d'un corps fermé par un chapeau comportant un soufflet vérin ou vérin cylindrique portant un clapet de soupape ramené sur un siège fixé sur le corps de soupape par un ressort de rappel, le clapet de soupape étant soumis à la pression à contrôler et cette pression est envoyée sur la première entrée du pilote pour commander la tige agissant sur le deuxième clapet disjoncteur, la sortie de la chambre dôme étant reliée à l'entrée du vérin ou soufflet vérin, tandis que la sortie du clapet disjoncteur est reliée à l'échappement de la soupape ou vanne de décharge.

Selon une autre particularité, le clapet met en communication la pression à réguler avec la chambre .

Selon une autre particularité, le clapet disjoncteur met en communication la chambre avec l'échappement de la soupape ou de la vanne de décharge.

Selon une autre particularité, la soupape ou la vanne de décharge est disposée à distance du pilote et reliée à celui-ci par des tuyauteries.

D'autres caractéristiques et avantages de la présente invention apparaîtront plus clairement à la lecture de la description ci-après faite en référence aux dessins annexés dans lesquels :
- la figure 1 représente une vue en coupe du pilote ;
- la figure 2 représente une vue en coupe d'un exemple de soupape à vérin avec laquelle le pilote peut être utilisé ;
- les figures 3A à 3E représentent le foncitionnement du pilote de la figure 2 branché sur une soupape à vérin de la figure 1 ;
- la figure 4A représente la courbe d'une soupape commandée par un pilote conventionnel ;
- la figure 4B représente la courbe d'une soupape commandée par le pilote avec coupleur mécanique selon l'invention ;
- la figure 5A représente une vue de dessus d'une rondelle à effet bistable ;
- la figure 5B représente une vue en coupe de cette rondelle ;
- la figure 6 représente une deuxième variante du pilote à effet modulant.

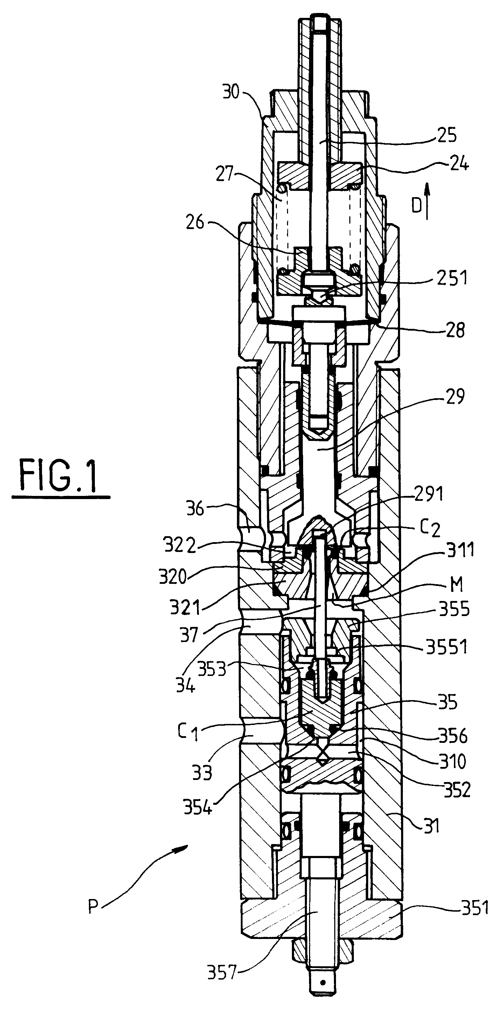

Le pilote, représenté à la figure 1 est constitué d'un corps (31) comportant un orifice d'entrée (33) qui met en communication l'extérieur du corps avec un alésage cylindrique (310) pratiqué dans celui-ci. Cet alésage cylindrique reçoit à une extrémité une chemise cylindrique (35) qui est vissée sur une plaque (35) fixée à l'extrémité, de façon à régler la position de cette chemise (35) dans le corps (31). La chemise (35) communique avec l'orifice (33) par un perçage (352) qui met en communication l'extérieur de la chemise avec un alésage intérieur (353) de la chemise. Cet alésage (353) se termine à l'extrémité de la chemise fixée sur la plaque (351) par un siège (354) sur lequel appuie un piston obturateur (C1) par l'intermédiaire d'un joint torique (356) solidaire de ce dernier et venant en appui selon une direction parallèle au sens de déplacement du piston (C1). A l'autre extrémité de la chemise (35), l'alésage (353) est obturé par une bague (355) formant vers l'intérieur de l'alésage un deuxième siège (3551). Cette bague (355) est vissée dans un filetage prévu sur la chemise (35). Cette deuxième bague (355) met en communication l'alésage (353) de la chemise (35) avec une chambre (M) qui communique d'une part avec l'extérieur du corps du clapet pilote par un orifice (34) d'entrée-sortie, d'autre part par l'intermédiaire d'un deuxième clapet (C2) avec un troisième orifice de sortie (36) mettant en communication l'alésage cylindrique interne du corps (31) du pilote avec l'extérieur de celui-ci. Le piston obturateur (C1) agit par une tige (37) sur une deuxième tige (29) dont une extrémité constitue la surface formant le deuxième clapet (C2) qui coopère avec un siège (32) monté sur un épaulement (311) de l'alésage cylindrique (310) du corps (31) du pilote. Le siège en deux parties (320, 321) forme une gorge permettant de recevoir un joint torique (322) qui assure l'étanchéité avec le clapet (C2). L'extrémité de la tige (29) comporte également un alésage cylindrique (291) du diamètre de la tige (37) et dans lequel la tige (37) coulisse pour venir en butée contre l'extrémité de cet alésage, de façon à transmettre la pression exercée par le fluide sur le piston (C1), lorsque cette tige (37) est au contact du fond de l'alésage (291). La longueur de la course de la tige (27) avant d'entrer en butée est réglée en fonction de la position de la chemise (35).

La deuxième extrémité de la tige (29) appuie sur des rondelles à effet bistable (28), qui sont tarées par un ressort (27) maintenant en appui une pièce d'appui (26). Cette pièce d'appui (26) est sollicitée vers l'extrémité supérieure du corps du pilote par une tige filetée (25) dont l'extrémité (251) en forme de tête tire sur la rondelle d'appui (26). Une deuxième pièce d'appui (24) se glisse également dans la tête du corps du pilote pour, par réglage et vissage de ces deux pièces (24, 25) sur l'extrémité (30) du corps du pilote, régler la force de tarage exercée par le ressort (27) sur les rondelles à effet bistable (28) de façon à produire l'effet bistable souhaité.

Le pilote comprend un clapet (C2) dont la face inférieure est en liaison avec le fluide à contrôler.

La force résultant de l'action de la pression du fluide à contrôler sur la surface du vérin (C2) est compensée en partie par la force donnée par le ressort de tarage (27), réglable sur une large étendue, force à laquelle vient s'ajouter au moment de l'ouverture l'effort d'armement provoqué par le coupleur mécanique (28) à effet bistable.

Le coupleur mécanique donne une précision d'ouverture ou refermeture du pilote de ± 1% de la valeur de tarage.

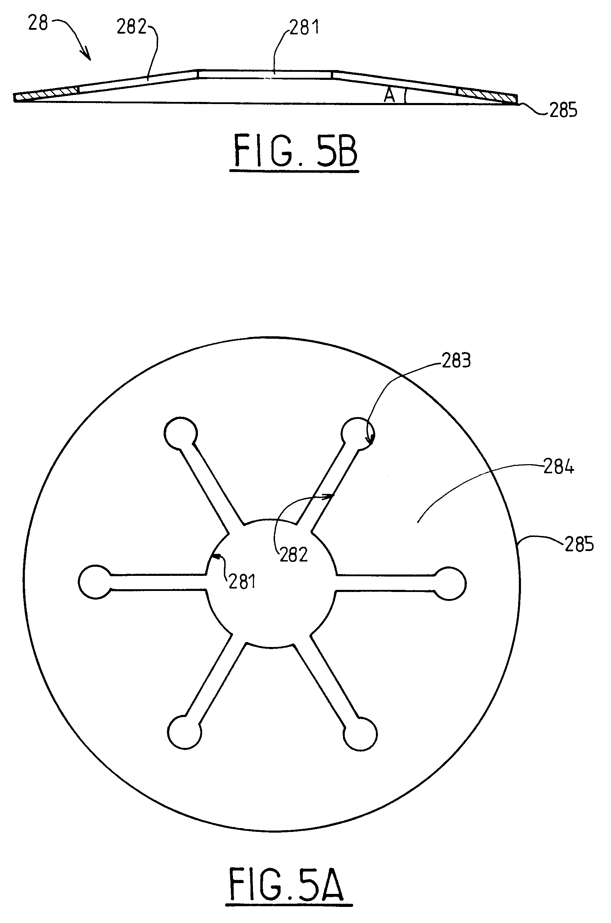

Le coupleur mécanique est constitué d'une série de rondelles (28, figure 5 à effet bistable), ces rondelles (28) comportent plusieurs découpes en forme de fente (282) orientées radialement et partant d'une découpe circulaire pratiquée au centre de la rondelle (281) pour s'étendre jusqu'à une distance donnée du bord de la rondelle (28). Ces découpes en forme de fente radiale (282) se terminent à leur extrémité borgne par une découpe circulaire (283). Par ailleurs, la rondelle est déformée de façon à ce que le plan de la découpe circulaire (281) située au centre de la rondelle soit décalée du plan formé par les bords externes de la rondelle et que les portions pleines (284) de rondelle forment un angle (A) ou une forme sphérique avec le plan formé par le bord externe (285) de la rondelle. Ces rondelles fendues donnent un effet clic clac et sont placées sous le ressort de tarage (27). Lorsque l'effort de poussée donné par le fluide à contrôler augmente, le déplacement faible de la tige (29) arme les rondelles, jusqu'au point d'équilibre.

Les clapets C1, C2 fonctionnent de la fermeture à l'ouverture de la façon suivante.

Au repos, l'ensemble ressort (27) appuie sur la tige (29), par l'intermédiaire des rondelles de poussée (28) de la tige de poussée (29) de la vis de tarage (25), le tout étant supporté par le corps (31).

La tige (29) appuie sur le joint. L'ensemble assure la fermeture,soit métal-métal ou toute autre portée de siège clapet.

Lorsque la pression du fluide à contrôler augmente, le clapet (C1) permet au fluide sous pression de venir sur la partie supérieure du clapet (C2). Le clapet (C1) est ouvert, le clapet (C2) fermé, la pression du fluide à contrôler entre en (33), traverse le clapet (C1) et ressort en (34).

Lorsque la pression du fluide à contrôler augmente sur le clapet (C2), la tige (29) se déplace suivant le sens (F)

Lorsque la pression du fluide à contrôler atteint la pression de tarage, moins quelques pour cents, la tige (29) met sous contrainte les rondelles (28).

La pression continuant de monter, la tige (29) arme les rondelles (28) du basculeur mécanique, sur quelques centièmes de mm.

Lorsque les rondelles (28) du basculeur mécanique atteignent le seuil de basculement, une légère augmentation de la pression du fluide à contrôler fait brusquement basculer l'ensemble de la tige (29). Cette dernière entraîne le clapet (C2) qui se retire du siège (32).

Lorsque la pression du fluide à contrôler redescend au voisinage de la pression de tarage, le phénomène inverse se produit, avec refermeture du clapet pilote (C2) de façon nette et brusque.

Pendant le mouvement de la tige (29), le clapet (C2) est resté plaqué contre le siège (32), jusqu'au moment de l'armement du coupleur mécanique (28).

Le réglage du siège (35) permet donc de régler des valeurs de fonctionnement différentes.

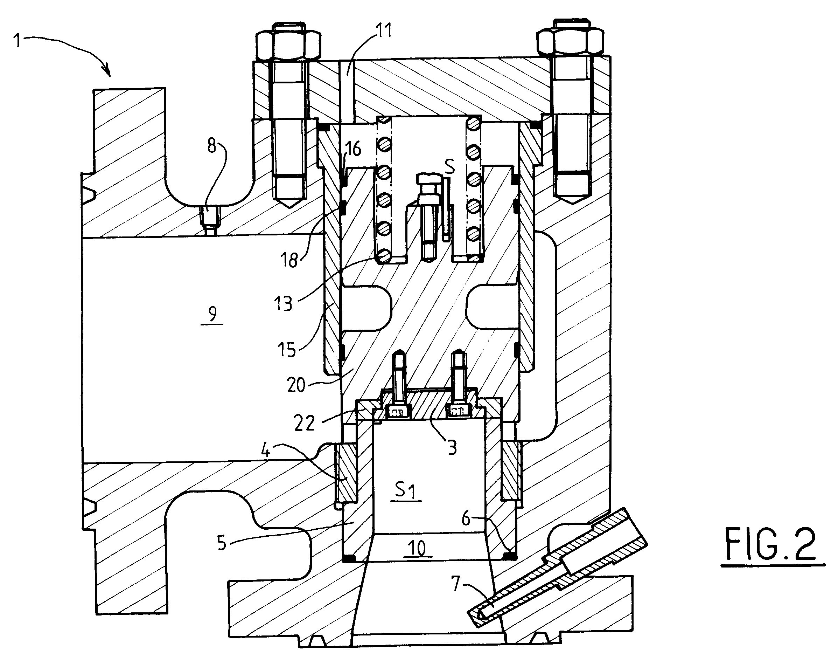

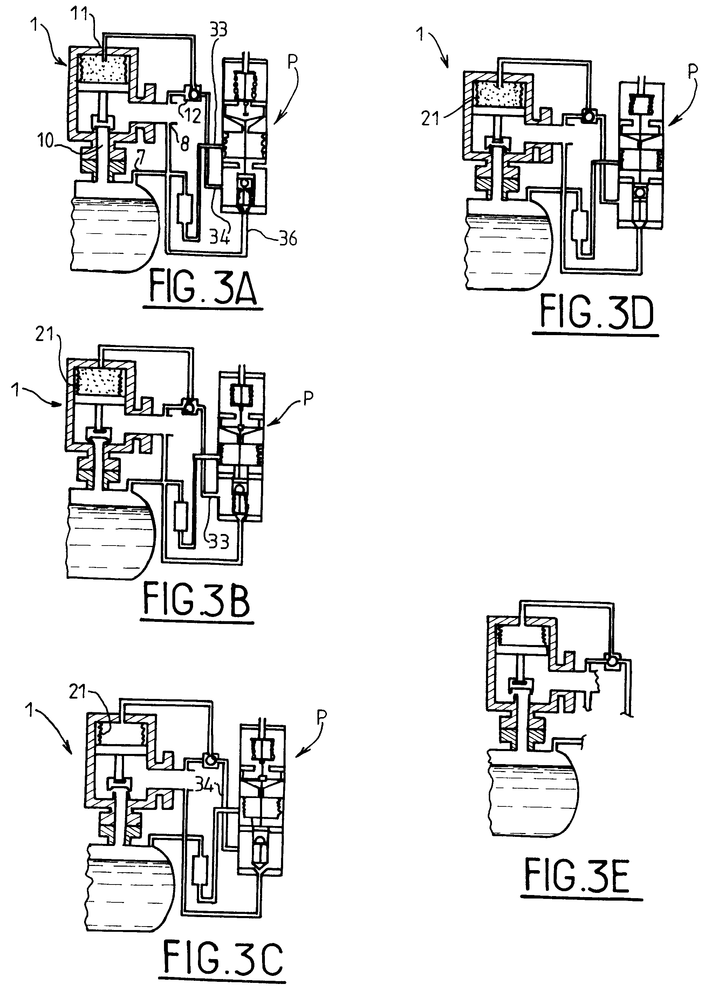

Le pilote de la figure 1 peut être utilisé, par exemple, en association avec une soupape ou vanne de décharge telle que celle représentée à la figure 2 dans laquelle un corps (1) est fermé par un chapeau (2). Le chapeau (2) porte, dans une chemise (15) un soufflet vérin (21, figure 3) ou vérin cylindrique (20, figure 2) ramené par un ressort de rappel (13) sur un siège (5) pour former un clapet de soupape ou de vanne rendu étanche grâce à un joint (22) maintenu par une plaque (3) rendue solidaire du piston (20). Le siège (5) est maintenu en place dans le corps (1) de la soupape par un manchon fileté (4). L'autre extrémité du corps cylindrique (20) de la soupape comporte des joints d'étanchéité (17, 18) sur les surfaces cylindriques et la chambre (S) délimitée par le chapeau (2) et l'extrémité du corps (20) de la soupape dans laquelle se situe le ressort (13) communique avec l'extérieur par un orifice pourvu d'un raccord (11). Le clapet formé sur le cylindre (20) sépare dans le corps (1) de la soupape ou vanne de décharge une zone (10) permettant de recevoir la pression à contrôler d'une deuxième zone (9) constituant la sortie d'échappement de la soupape ou vanne de décharge. Cette zone (9) est pourvue d'une entrée de raccord (8) alors que la première zone (10) est pourvue également d'une entrée de branchement (7). Pour son utilisation sur la soupape de la figure 2, le pilote est branché de telle façon que l'entrée-sortie (34) est reliée par une vanne à trois positions (12) avec l'orifice d'entrée (11) de la chambre (S), l'entrée (33) du clapet est reliée à la prise de pression (7) sur la pression à contrôler et la sortie (36) est reliée par une tuyauterie à l'entrée (8) de mise à l'échappement de la soupape.

En fonctionnement, le clapet (22) s'applique sur le siège (5) de la soupape par la poussée du fluide à contrôler, sur le vérin (20) ou soufflet vérin (21), la mise en communication étant faite par le pilote.

La poussée donnée par la pression (P) du fluide à contrôler, s'exerce sur la surface (S) du vérin (20) ou du soufflet vérin (21) et s'oppose à la poussée du même fluide sur la surface (S1) du clapet siège.

La force d'appui résultante étant P X S - P X S1 = P(S-S1). La section (S) du piston (20) ou du soufflet vérin dans la chambre supérieure est déterminée pour obtenir une pression de contact optimale entre siège (5) et clapet (22) et éviter tout phénomène de fuites ou fusage avant commande d'ouverture de la soupape par le pilote.

Le rapport des sections est défini par le type de matériaux en contact entre siège et clapet et en fonction des fluides à contrôler et de la température de ces derniers.

Lorsque la pression (P) atteint une valeur nulle dans le vérin (20) ou le soufflet vérin (21), le clapet se soulève sous une poussée égale à P X S1.

Les figures 3A à 3E représentent les différents états que peut prendre l'ensemble pilote-vanne de décharge à soufflet vérin et seront explicités ci-après.

Les figures 3 représentent l'utilisation du pilote avec une vanne à soufflet (21) mais il est bien évident que l'utilisation et le fonctionnement avec une vanne ou soupape à vérin (20) sera identique.

A la figure 3A, la pression dans la zone (10) de la soupape est inférieure à la pression maximale à surveiller (PMS). Dans ce cas, le clapet (C1) du pilote est ouvert, le clapet (C2) est fermé et le ressort (27) et les rondelles à effet bistable (28) appuient le clapet (C2) sur son siège (32). La pression du fluide prélevée par l'entrée (7) traverse la chambre (M) et agit par la sortie (34), la vanne à trois positions (12) et l'entrée (11) sur le soufflet (21) ou sur le vérin (20) de la soupape ou vanne et celle-ci est fermée.

A la figure 3B, lorsque la pression du fluide à contrôler augmente jusqu'à une valeur correspondant à la pression PMS moins 5%, la tige (37) de la vanne du pilote appuie sur la deuxième tige (29) et sur les rondelles à effet bistable (28). C1 est prêt à fermer, C2 est toujours fermé et la soupape ou vanne, par son soufflet (21) est toujours fermée.

Le troisième état, représenté à la figure 3C, correspond à celui où la pression du fluide à contrôler atteint la valeur de la PMS à 1% près. Dans ce cas, la pression exercée sur la tige (29) dépasse le point de basculement des rondelles (28) et ces rondelles (28) basculent brutalement par l'effet clic clac. Le clapet (C1) se ferme et le clapet (C2) s'ouvre, mettant à l'échappement le fluide contenu sur la face supérieure (S) du soufflet (21) ou piston (20) de la soupape. La soupape ou vanne s'ouvre sous l'effet de la pression, agissant sur la surface (S1) de la plaque (3, fig 2).

Le quatrième état, représenté à la figure 3D correspond à celui où la pression du fluide à contrôler redescend à la pression PMS plus 2 à 3%, le coupleur mécanique (28) s'arme dans le sens de la poussée (aide à l'effort du ressort 27) sur une plage très faible. Le quatrième état est le même que le deuxième état mais la soupape est ouverte, le clapet (C1) est fermé, et le clapet (C2) reste ouvert.

Le cinquième état correspond à celui où la pression du fluide à contrôler atteint la PMS moins 2% à 3%. Le coupleur (28) bascule, le clapet (C1) s'ouvre, le clapet (C2) se ferme. La pression agit sur le vérin (20) ou le soufflet vérin (21) fermant la soupape pour retrouver le premier état.

Le sixième état correspond à la marche manuelle. Le robinet à 3 voies (12), à commande manuelle ou automatique à commande électrique ou pneumatique, par pressostat, capteur ou autre permet d'ouvrir la soupape, quelque soit la position du pilote ou la pression du fluide à contrôler, en mettant à l'échappement la chambre (S).

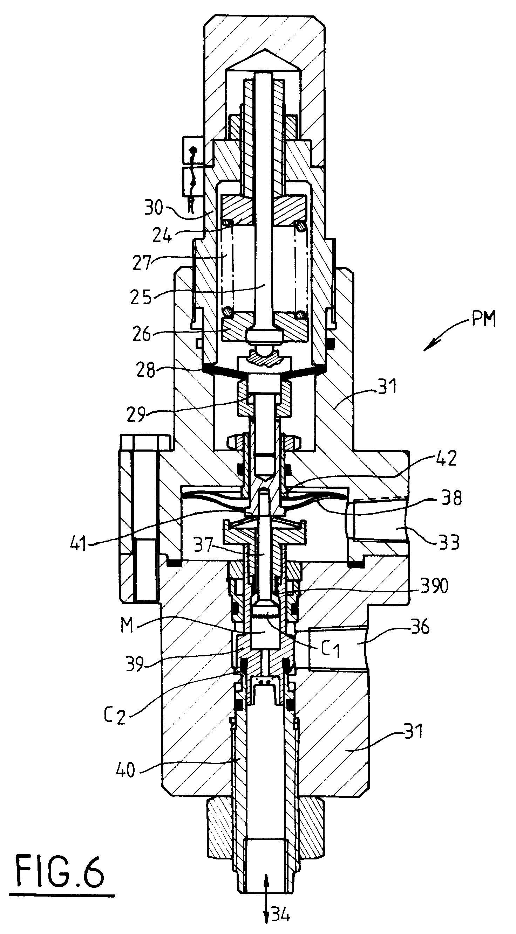

Une autre variante de réalisation d'un pilote à effet de modulation est représentée à la figure 6. Dans cette variante le pilote, dans un corps (31) constitué en deux pièces et comportant l'entrée (36), l'entrée sortie (34) et une sortie (36) comporte, comme précédemment, un clapet (C1) et un clapet (C2). Le clapet (C1) fermant la communication entre l'entrée (33) et l'entrée-sortie (34) et le clapet (C2) fermant ou ouvrant la communication entre l'entrée-sortie (34) et la sortie (36). Le clapet (C1) est monté dans une chemise (39) et lorsqu'il vient en appui sur le siège (390) monté dans la partie supérieure de la chemise (39) il entraîne avec lui cette chemise et ouvre ainsi le clapet (C2). Ce clapet (C1) est monté solidaire d'une tige (37) qui est rendue elle-même solidaire d'un élément à membrane formant soufflet (38) qui est monté sur un manchon (41). Le manchon (41) est rendu solidaire d'un axe (29) à l'extrémité duquel sont montées les rondelles à effet clic-clac (28).

Comme précédemment, l'effort des rondelles à effet clic-clac (28) s'ajoutent à la force du ressort (27) et un système de réglage à plaque d'appui (26) et contre-plaque (24) et tige tirant (25) est utilisé. Le deuxième clapet (C2) vient reposer sur un siège (40) qui est constitué par une chemise cylindrique montée à l'extrémité du corps cylindrique (31) du pilote. Le fonctionnement est identique à celui du pilote de la figure 1, à l'exception que la membrane soufflet se déformant sous l'effet des pressions va permettre au clapet (C1) de remonter sur son siège (390) et obturer ainsi la communication entre l'entrée (33) et l'entrée-sortie (34). Lorsque la pression continue de monter, la membrane (38) se déforme encore et entraîne ainsi le clapet (C1) qui lui-même entraîne la chemise (39) décollant ainsi le clapet (C2) de son siège (40). Ceci établit une communication entre l'entrée-sortie (34) et la sortie (36), ce qui fait baisser la pression et par conséquent ramène le clapet (C2) sur son siège. Lorsque la pression sur la membrane (38) devient trop importante et que la pression sur le clapet (C1) augmente de façon à atteindre la pression de basculement des rondelles (28), celles-ci basculent et ouvrent ainsi le clapet (C2) qui permet ainsi de relier l'entrée-sortie (34) à la sortie (36).

On comprend ainsi que le soufflet (38) a un effet modulant permettant de moduler la pression pour des valeurs inférieures à la pression de basculement, de façon à permettre une meilleure modulation de l'ouverture et de la fermeture de la vanne. Le montage d'un tel pilote s'effectue de la même façon que pour le pilote de la figure 1 en reliant les sorties comportant les mêmes références, de la même façon que sur les figures 3A à 3E.

Les deux membranes s'emboîtent l'une dans l'autre en cas de surpression importante évitant toute détérioration.

Les principaux avantages de la présente invention sont les suivants.

Une parfaite étanchéité est obtenue par l'action du fluide à contrôler sur un ensemble piston obturateur. Un pilote bistable à effet couplage relâche cette action lorsque la pression de déclenchement est atteinte.

La soupape fonctionne en tout ou rien, soit ouverte, soit fermée, sans position intermédiaire.

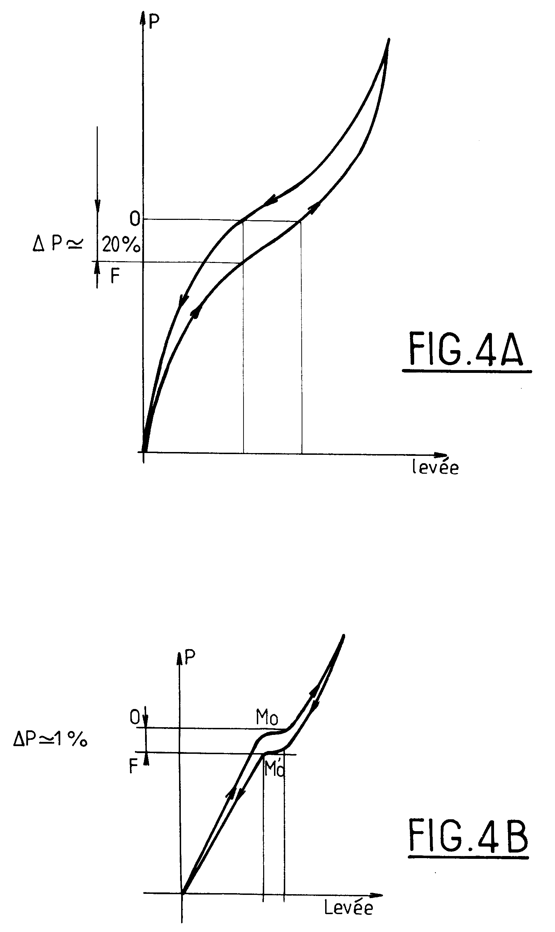

Une étanchéité parfaite, jusqu'à 99% de la pression de début d'ouverture, peut ainsi être obtenue comme le montre la courbe de la figure 4B par rapport à celle de la figure 4A correpondant à l'art antérieur.

La soupape étant ouverte ou fermée et ne subissant pas de phénomène de fusage ou de laminage, elle est insensible au nombre d'ouvertures, de fermetures, au fluide et à l'abrasion. Le coupleur du pilote à effet de basculement instantané évite également ces phénomènes dans le pilote.

La soupape pilotée permet un fonctionnement à tout débit. N'importe quelle orientation peut être donnée au pilote.

Les ressorts de tarage du pilote développent peu d'efforts donc fonctionnent avec un très faible taux de travail. Ils ne sont pas soumis à la température, aux agents extérieurs. Leur stabilité est donc parfaite.

L'association ressort coupleur, membrane de mesure, donc sans frottement, assure une précision à l'ouverture et à la fermeture aisément réglable, surtout dans les faibles pressions.

En outre, le dispositif ne provoque pas de battements de la soupape en fonctionnement.

L'ouverture et la fermeture de la soupape sont silencieuses.

Les pertes de charges minimales permettent d'obtenir un débit maximum.

Les fuites étant supprimées, il n'est pas nécessaires de contrôler les fuites.

Il n'y a pas de sensibilité aux contre pressions ou à une marche sous vide.

Suivant l'application, l'installation peut se faire à distance ou sur la soupape, l'installation à distance permettant de tarer la soupape sans risque.

Les clapets (C1, C2) ne comportent pas de joint vers l'extérieur, il n'y a donc pas de frottement.

Le raccordement du soufflet (21) ou piston (20) peut être différent de la prise d'impulsion (7) pour le détecteur. Le fonctionnement de l'ensemble est donc indépendant des pertes de charges. Le pilotage peut être effectué à une autre valeur que celle du fluide à contrôler. Par exemple, contrôler en plus de la pression, la charge du fluide dans l'appareil.

La soupape et son pilote sont insensibles aux secousses sismiques.

L'emploi du pilote autorise l'asservissement de l'ensemble à tous les moyens de régulation et de protection connus, capteur, électrovannes, vannes manuelles, vannes pneumatiques,...

La conception de l'ensemble permet l'utilisation de la soupape dans une plage :
- de températures de 1.8 K (- 271°C) à 773 k (500°C) ;
- de pressions variant du vide à de très fortes pressions, 0 bar absolu à 1000 bar ;
- d'étanchéité variant de 1 - 10⁻⁷ mbar ls⁻¹ avec joints à portée plastique spéciale suivant température, ou traitement spécial des portées métal/métal.

Le pilote est monté de préférence verticalement, ce qui assure un tarage stable et précis, contrairement aux résultats obtenus avec des pilotes horizontaux.

D'autres modifications à la portée de l'homme de métier font également partie de l'esprit de l'invention.

## Revendications

1. Pilote à effet bistable, caractérisé en ce qu'il est constitué d'un corps (31) dans lequel un orifice d'entrée (33) communique avec un ensemble piston obturateur (C1) disposé dans le corps cylindrique du pilote et se déplace dans une chemise (35, 39) pourvue à au moins une extrémité d'un siège (354, 355, 390), le piston obturateur (C1) mettant en communication l'orifice d'entrée (33) avec une chambre (M) qui communique d'une part avec un orifice d'entrée-sortie (34) et d'autre part avec un clapet pilote (C2) disjoncteur mécanique à effet bistable qui, dans sa deuxième position stable, met en communication la chambre (M) avec une deuxième sortie (36).

2. Pilote selon la revendication 1, caractérisé en ce que le déplacement du piston obturateur est rendu solidaire de la déformation d'une membrane soufflet pour provoquer une ouverture partielle du clapet à effet bistable avant le déclenchement de l'effet bistable.

3. Pilote selon la revendication 2, caractérisé en ce que la position de la chemise (39) dans le corps (31) du pilote est réglable en position par rapport au corps (31) du pilote par des moyens (40) pour modifier la course avant ouverture du clapet pilote (C2).

4. Pilote selon la revendication 1, caractérisé en ce que le clapet à piston obturateur (C1) se déplace dans la chemise (35) comportant un siège situé à chaque extrémité et dont le siège inférieur (354) est obturé de façon étanche par un joint (356) solidaire de la face avant du piston obturateur (C1).

5. Pilote selon la revendication 4, caractérisé en ce que le deuxième siège (3551) de la chemise (35) est rendu solidaire de cette dernière par un filetage intérieur prévu sur une de ses extrémités.

6. Pilote selon une des revendications 1 ou 4, ou 5, caractérisé en ce que la position de la chemise dans le corps du pilote est réglable en position par rapport au corps du pilote par des moyens pour modifier la course avant entrée en contact d'une tige solidaire du piston obturateur avec le clapet pilote pour agir sur son ouverture et pour modifier la position d'entrée en contact du piston obturateur avec le second siège.

7. Pilote selon une des revendications 1 à 6, caractérisé en ce que le clapet pilote disjoncteur (C2) est maintenu en appui sur son siège (32) par des rondelles (28) à effet bistable sollicitées en permanence dans la position assurant la fermeture du clapet par une pièce d'appui (26) sur laquelle agit l'extrémité d'un ressort de tarage (27) dont l'autre extrémité prend appui sur la partie fixe (24, 30) du corps (31) du pilote.

8. Pilote selon la revendication 7, caractérisé en ce que la force exercée par le ressort de tarage (27) déterminant la pression d'ouverture du clapet pilote est réglée par une tige filetée (25) vissée sur une partie (24) solidaire du corps (31) et tirant sur la pièce d'appui (26).

9. Pilote selon une des revendications précédentes, caractérisé en ce que les étanchéités siège-clapet se font sur les faces avant.

10. Utilisation du pilote selon une des revendications précédentes, caractérisée en ce que le pilote est utilisé pour commander une soupape ou vanne de décharge formée d'un corps (1) fermé par un chapeau (2) comportant un soufflet vérin (21) ou vérin cylindrique (20) portant un clapet de soupape (22) ramené sur un siège (5) fixé sur le corps de soupape (1) par un ressort de rappel (13), le clapet de soupape (22) étant soumis à la pression à contrôler et cette pression est envoyée sur la première entrée (33) du pilote pour commander la tige (37) agissant sur le deuxième clapet disjoncteur (C2), la sortie (34) de la chambre dôme (M) étant reliée à l'entrée (11) du soufflet vérin (21) ou vérin (20), la sortie (36) du deuxième clapet disjoncteur (C2) étant reliée à l'échappement (8) de la soupape.

11. Utilisation du pilote selon la revendication 10, caractérisée en ce que le clapet (C1) met en communication la pression à réguler avec la chambre (M).

12. Utilisation du pilote selon la revendication 10, caractérisée en ce que le clapet disjoncteur (C2) met en communication la chambre (M) avec l'échappement (8) de la soupape ou vanne de décharge.

13. Utilisation du pilote selon une des revendications 10 à 12, caractérisée en ce que la soupape ou la vanne est disposée à distance du pilote et reliée à celui-ci par des tuyauteries.
